# EUROPÄISCHE PATENTSCHRIFT

(11) **EP 0 493 415 B1**
(45) Veröffentlichungstag und Bekanntmachung des Hinweises auf die Patenterteilung: **01.12.1993**
(21) Anmeldenummer: 90913338.1
(22) Anmeldetag: 19.09.1990
(51) Int. Cl.: F16L 55/16, F16L 55/18, E03F 3/06

(54) **VERFAHREN UND EINRICHTUNG ZUM SANIEREN VON ABWASSERKANÄLEN**
PROCESS AND DEVICE FOR OVERHAULING DRAINS
PROCEDE ET DISPOSITIF POUR ASSAINIR DES CANIVEAUX

(30) Priorität: 22.09.1989 DE 3931616
(43) Veröffentlichungstag der Anmeldung: 08.07.1992
(73) Patentinhaber: UFFMANN, Hans-Peter, 52072 Aachen (DE)
(72) Erfinder: UFFMANN, Hans-Peter, 52072 Aachen (DE)
(74) Vertreter: König, Werner, Dipl.-Ing.
(86) Internationale Anmeldenummer: DE9000716
(87) Internationale Veröffentlichungsnummer: WO9104437

(56) Entgegenhaltungen:
- DE-A- 3 737 301
- FR-A- 2 642 816
- GB-A- 2 157 796

## Beschreibung

Die Erfindung betrifft ein Verfahren zum Sanieren von Abwasserkanälen, bei dem thermoplastische Kunststoffrohre unter Uberdeckung einmündender Hausanschlüsse in den Abwasserkanal eingeführt und an Hausanschlusse angeschlossen werden. Sie betrifft ferner eine Einrichtung zur Durchfuhrung eines solchen Verfahrens, mit einem Wagen der in dem Abwasserkanal verfahren werden kann.

Ein Verfahren der eingangs genannten Art ist aus der DE-37 37 301 A1 bekannt. Dort wird zur Sanierung von Abwasserkanälen zunächst die Position von einmundenden Anschlüssen genau vermessen und dann ein aus ineinandergesteckten Kurzrohrstücken bestehendes Einsatzrohr in den Abwasserkanal eingebracht. An den Stellen der Anschlusse werden im eingebauten Zustand des Einsatzrohrs Anschlußöffnugen eingearbeitet. Dabei werden z.B. Fräswerkzeuge eingesetzt, die über Schablonen vom kontrollschacht her gesteuert werden. Der die Durchlaßöffnung umgebende Ringspalt muß noch gesondert abgedichtet werden.

Die hier vorgesehene Einarbeitung der Durchlaßöffnungen sowie die Herstellung einer ausreichend zuverlässigen Dichtung sind nur schwer und aufwendig zu bewerkstelligen.

Der Erfindung liegt daher die Aufgabe zugrunde, ein Verfahren anzugeben, welches bei geringem Arbeitsaufwand eine sichere, dichtende Verbindung zwischen den in den Abwasserkanal eingebrachten Kunststoffrohren einerseits und den Hausanschlüssen andererseits ermöglicht. Außerdem soll eine zur Durchführung des Verfahrens geeignete Einrichtung angegeben werden.

Zur Lösung dieser Aufgabe sieht die Erfindung bei einem Verfahren der eingangs erwähnten Art vor, daß die Kunststoffrohre in dem den Querschnitt einmündender Hausanschlüsse überdeckenden Bereich mittels Druck und Warme in der Art eines Stutzens in den Hausanschluß hinein an dessen Wandung anliegend verformt und geöffnet werden.

Nach diesem Verfahren wird also der Bereich des Kunststoffrohrs, der vor einem Hausanschluß liegt, erwärmt und unter Druck so verformt, daß er sich an die Wandung des Hausanschlusses anlegt. Gesonderte Dichtungsmaßnahmen in dem Ringraum zwischen Kunststoffrohr und Hausanschluß sind nicht erforderlich.

Das erfindungsgemäße Verfahren kann ferner so ausgefuhrt werden, daß der verformte Bereich an seinem am weitesten in den Hausanschluß hineinragenden Teil beschnitten wird. Durch ein solches Beschneiden kann der durch verformen gebildete, in den Hausanschluß hinein ragende Stutzen auf die gewünschte Länge und Form zugeschnitten werden. Die Form kann insbesondere darauf abgestellt werden, daß sich keinerlei Hindernisse in der Durchströmungsrichtung des Hausanschlusses ergeben.

Das erfindungsgemäße Verfahren kann ferner so ausgeführt werden, daß die Position des Uberdeckungsbereichs durch vorangehende Kanalvermessung festgestellt und anschließend in den Kunststoffrohren wieder eingemessen wird.

Das erfindungsgemäße Verfahren kann ferner so ausgebildet sein, daß die Position des Uberdeckungsbereichs aus dem Hausanschluß heraus markiert und mittels optischer Beobachtung oder über Sensoren wieder eingestellt wird.

Die zur Durchführung des erfindungsgemäßen Verfahrens vorgesehene Einrichtung zeichnet sich dadurch aus, daß der Wagen einen an eine Energiequelle angeschlossenen beheizbaren Verformkörper trägt, der im Uberdeckungsbereich aus dem Abwasserkanal heraus in den Hausanschluß hinein und wieder zuruck zum Wagen verlagerbar ist. Dieser Verformkörper wird aufgeheizt und dann gegen den Bereich des betreffenden Kunststoffrohrs gedrückt, der vor der Mündung eines Hausanschlusses liegt. Dabei wird der Kunststoff plastifizierbar. Er verformt sich entsprechend dem Druck des Verformkörpers. Aufgrund der Dimensionierung dieses Elements wird der sich dabei bildende Stutzen an die Wandung des Hausanschlusses angelegt. Dieser Stutzen wird, vorzugsweise an dem am weitesten in den Hausanschluß hineinragenden Ende, durchbrochen, ergibt somit einen umlaufenden Rand und öffnet sich in den Hausanschluß hinein.

Die erfindungsgemäße Einrichtung kann ferner so ausgeführt sein, daß der Verformkörper auf seiner dem Hausanschluß zugewandten Seite bei kreisrundem Querschnitt gewölbt oder zugespitzt ausgebildet ist. Durch die Gestaltung des verformkörpers kann die Länge des Stutzens und das Anlegen des Stutzens an der Wandung des Hausanschlusses bestimmt werden.

Die erfindungsgemäße Einrichtung kann ferner so ausgebildet sein, daß der Verformkörper mit ausfahrbaren, rundum wirksamen Schneidelementen versehen ist. Diese Schneidelemente können den sich bildenden Stutzen in der gewünschten Position abschneiden und auch dazu verwendet werden, dem Rand des Stutzens ein für die Durchströmung günstiges Profil zu geben.

Die erfindungsgemäße Einrichtung kann ferner so ausgebildet sein, daß am Verformkörper ein Koppelelement vorgesehen ist, das lösbar mit einer in einem Hausanschluß führbaren Koppelstange verbindbar ist. Dabei wird die Koppelstange durch den Hausanschluß hindurch annähernd mittig gefuhrt. Diese Koppelstange durchdringt die Wand des hier angeordneten Kunststoffrohrs und tritt in Verbindung mit dem koppelelement des Verformkörpers. Die so zustandegekommene verbindung ermöglicht es, durch den Hausanschluß hindurch den Verformkörper gegen die Innenseite des betroffenen Kunststoffrohres zu ziehen, den hier liegenden Bereich des Rohres zu erwärmen und schließlich in den Hausanschluß hinein zu verformen. Nach Eintreten der entsprechenden Verformung wird der Verformkörper mittels der Koppelstange wieder zum Wagen zurückbefördert.

Die erfindungsgemäße Einrichtung kann ferner so ausgebildet sein, daß die Koppelstange mit dem Verformkörper verschraubbar ist. Diese Verbindung läßt sich durch eine einfache Drehbewegung herstellen bzw. wieder aufheben.

Schließlich kann die erfindungsgemäße Einrichtung so ausgebildet sein, daß der Verformkörper in seinem Umfang aufweitbar ist. Dadurch kann das Anlegen des so aus einem Kunststoffrohr gebildeten Stutzens an der Wandung des Hausanschlusses verbessert werden. Auch kann auf diese Weise leicht eine Anpassung an die jeweils vorliegenden Abmessungen erfolgen.

Im folgenden Teil der Beschreibung werden eine Ausführungsform des erfindungsgemäßen Verfahrens sowie eine Ausführungsform der erfindungsgemäßen Einrichtung anhand der Zeichnung beschrieben. Es zeigt:
- Fig.1: einen Axialschnitt durch einen Abwasserkanal mit Hausanschluß, wobei ein Kunststoffrohr in den Abwasserkanal eingelegt ist und die Mündung eines Hausanschlusses noch überdeckt,
- Fig.2: eine der Fig. 1 ähnliche Ansicht, bei der ein Verformkörper vom Innern des Abwasserkanals her in einen Hausanschluß zur Bildung eines Stutzens eingezogen ist, und
- Fig.3: eine den Fig. 1 und 2 ähnliche Darstellung, in der der Stutzen fertig ausgebildet ist.

Die Figuren zeigen einen Abwasserkanal 1, in den ein Hausanschluß 2 mündet. Zur Sanierung des Abwasserkanals 1 ist in diesen ein Kunststoffrohr 3 eingesetzt, das in beliebig langen Rohrstücken von einem Kontrollschacht zum anderen reichen kann. Das Kunststoffrohr 3 besteht aus einem thermoplastischen Kunststoff.

Nach dem Einbau des Kunststoffrohres 3 überdeckt dieses zunächst die Mündungsöffnung des Hausanschlusses 2. Durch den Hausanschluß 2 ist eine Koppelstange 4 hindurchgeführt, deren vorn liegendes Ende mittels eines Führungseinsatzes 5 zentral in dem Hausanschluß 2 geführt ist. Die Koppelstange 4 ist an ihrem vorderen Ende zugespitzt. Sie wird von dem Hausanschluß 2 aus durch die Wandung des Kunststoffrohrs 3 durchgestoßen und tritt in das Innere des Abwasserkanals 1 ein.

In dem Abwasserkanal 1, dessen Innenwandung nun von dem Kunststoffrohr 3 gebildet ist, läuft ein Wagen 6. Dieser Wagen 6 ist im Kunststoffrohr 3 gesteuert verfahrbar. Er ist über Kabel 12 mit einem übertägigen Steuerstand gekoppelt, von wo er auch mit Energie versorgt wird.

Der Wagen 6 trägt einen kugelförmigen Verformkörper 7, der ein Koppelelement 8 zum Zusammenwirken mit der Koppelstange 4 aufweist. Der Verformkörper 7 ist beheizbar und zu diesem Zweck mit einem Stromanschlußkabel 9 versehen. Ferner sitzt auf dem Wagen 6 eine Fernsehkamera 10, die es ermöglicht, die ablaufenden Arbeiten am Steuerstand zu beobachten.

Der Verformkörper 7 ist im dargestellten Ausfuhrungsbeispiel kugelförmig ausgebildet. Es Kann mit nicht gezeigten Schneidelementen verbunden sein und einen veränderbaren Außendurchmesser haben.

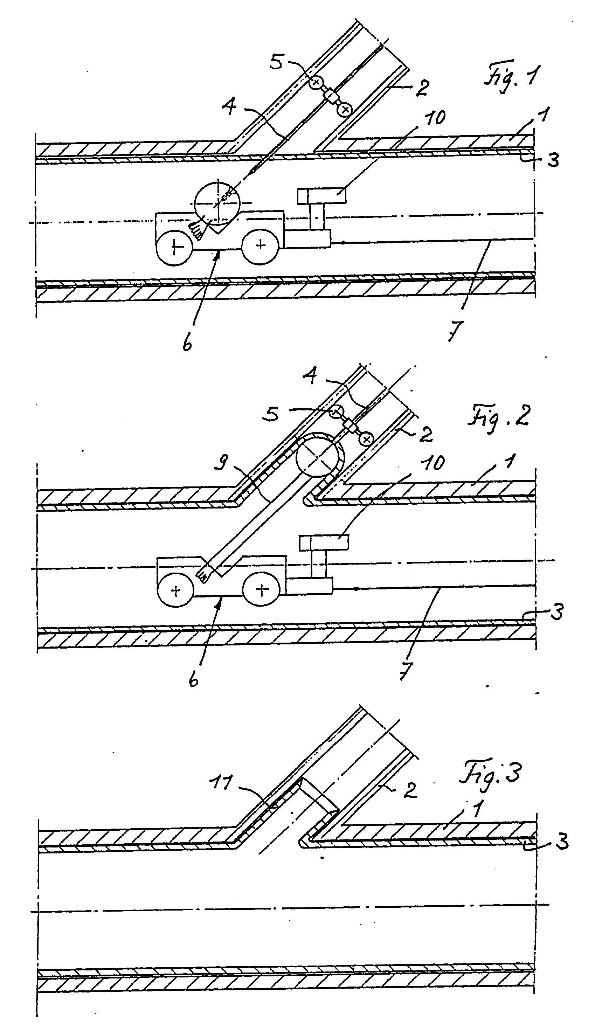

Bei der Sanierung des Abwasserkanals mit den Kunststoffrohren 3 werden diese in den Kanal 1 von einem Kontrollschacht zum anderen reichend nacheinander eingebaut. Dann wird durch den Hausanschluß 2 hindurch die Koppelstange 4 durch die Wandung des betroffenen Kunststoffrohrs 3 hindurchgeführt. Der Wagen 6 mit dem von ihm getragenen Verformkörper 7 wird in die Position gebracht, in welcher ein Zusammenarbeiten zwischen der Koppelstange 4 und dem Koppelelement 8 des Verformkörpers 7 möglich ist. Diese Position des Wagens 6 kann durch vorangehende Kanalvermessung, durch optische Beobachtung über die Fernsehkamera 10 oder durch Sensoren festgestellt werden, welche die Position der Koppelstange 4 erkennen. Es ergibt sich dann die in Fig.1 dargestellt Position. Anschließend wird eine Koppelung zwischen der Koppelstange 4 und dem Verformkörper 7 hergestellt. Die Koppelstange 4 wird dann zurückgezogen, so daß der Verformkörper 7 an dem die Mündung des Hausanschlusses 2 abdeckenden Bereich des Kunststoffrohrs 3 zur Anlage kommt. Der Verformkörper 7 wird aufgeheizt und heizt dabei die anliegende Wandung des Kunststoffrohrs 3. Diese wird nun verformbar. Der Verformkörper 7 wird dann weiter in den Hausanschluß 2 eingezogen, wobei sich die in Fig.2 dargestellte Position ergibt. Mittels nicht dargestellter Schneidelemente, die aus dem Verformkörper 7 ausfahrbar sind, wird nun ein Schnitt durchgeführt, welcher dem so gebildeten Stutzen 11 die dargestellte Randausbildung gibt.

## Patentansprüche

1. Verfahren zum Sanieren von Abwasserkanälen, bei dem thermoplastische Kunststoffrohre unter Überdeckung einmündender Hausanschlüsse in den Abwasserkanal eingeführt und an Hausanschlüsse angeschlossen werden, **dadurch gekennzeichnet,** daß die Kunststoffrohre in dem den Querschnitt einmündender Hausanschlüsse überdeckenden Bereich mittels Druck und Wärme in der Art eines Stutzens in den Hausanschluß hinein an dessen Wandung anliegend verformt und geöffnet werden.

2. Verfahren nach Anspruch 1, dadurch gekennzeichnet, daß der verformte Bereich an seinem am weitesten in den Hausanschluß hineinragenden Teil beschnitten wird.

3. Verfahren nach Anspruch 1 oder 2, dadurch gekennzeichnet, daß die Position des Überdeckungsbereichs durch vorangehende Kanalvermessung festgestellt und anschließend in den Kunststoffrohren wieder eingemessen wird.

4. Verfahren nach Anspruch 1 oder 2, dadurch gekennzeichnet, daß die Position des Überdeckungsbereichs aus dem Hausanschluß heraus markiert und mittels optischer Beobachtung oder über Sensoren wieder eingestellt wird.

5. Einrichtung zur Durchführung des Verfahrens nach einem der Ansprüche 1 bis 4, mit einem in dem Abwasserkanal verfahrbaren Wagen, **dadurch gekennzeichnet,** daß der Wagen (6) einen an eine Energiequelle angeschlossenen beheizbaren Verformkörper (7) trägt, der im überdeckungsbereich aus dem Abwasserkanal (1) heraus in den Hausanschluß (2) hinein und wieder zurück zum Wagen (6) verlagerbar ist.

6. Einrichtung nach Anspruch 5, dadurch gekennzeichnet, daß der Verformkörper (7) auf seiner dem Hausanschluß (2) zugewandten Seite bei kreisrundem Querschnitt gewölbt oder zugespitzt ausgebildet ist.

7. Einrichtung nach Anspruch 5 oder 6, dadurch gekennzeichnet, daß der Verformkörper (7) mit ausfahrbaren, rundum wirksamen Schneidelementen versehen ist.

8. Einrichtung nach einem der Ansprüche 5 bis 7, dadurch gekennzeichnet, daß am Verformkörper (7) ein Koppelelement (8) vorgesehen ist, das lösbar mit einer in einem Hausanschluß (2) führbaren Koppelstange (4) verbindbar ist.

9. Einrichtung nach Anspruch 8, dadurch gekennzeichnet, daß die Koppelstange (4) mit dem Verformkörper (7) verschraubbar ist.

10. Einrichtung nach einem der Ansprüche 5 bis 9, dadurch gekennzeichnet, daß der Verformkörper (7) in seinem Umfang aufweitbar ist.

## Claims

1. Process for overhauling drains, whereby thermoplastic pipes are inserted into the drain and connected to service branch lines, characterized in that in the area overlapping the cross-section of incoming branch lines the plastic pipes are inserted into the branch line and subsequently deformed and opened against the walls of the branch line by means of pressure and heat, in the form of a connecting sleeve.

2. Process in accordance with claim 1, characterized in that the deformed area is cut at the point which protrudes furthest into the branch line.

3. Process in accordance with claim 1 or 2, characterized in that the position of the overlapping area is determined via prior measurement of the drain and subsequently calibrated on the plastic pipes.

4. Process in accordance with claim 1 or 2, characterized in that the position of the overlapping area is marked from the branch line and aligned via visual observation or sensors.

5. Device for carrying out the process in accordance with one of claims 1 to 4, with a truck which can be moved in the drain, characterized in that the truck (6) carries a moulding element (7) connected to an energy source, whereby in the overlapping area it is possible to move the moulding element (7) out of the drain (1) and into the branch line (2) and subsequently back to the truck (6).

6. Device in accordance with claim 5, characterized in that the side of the moulding element (7) facing the branch line (2) is arched or pointed, with a circular cross-section.

7. Device in accordance with claim 5 or 6, characterized in that the moulding element (7) is provided with extendable all-round cutting elements.

8. Device in accordance with one of claims 5 to 7, characterized in that the moulding element (7) is provided with a coupling element (8) which can be connected in detachable configuration to a coupling rod (4) which can be installed in a branch line (2).

9. Device in accordance with claim 8, characterized in that the coupling rod (4) can be screwed together with the moulding element (7).

10. Device in accordance with one of claims 5 to 9, characterized in that the circumference of the moulding element (7) is expandable.

## Revendications

1. Procédé pour l'assainissement de caniveaux dans lequel des tuyaux synthétiques thermoplastiques sont insérés dans le caniveau sous recouvrement à l'embouchure de raccords domestiques et raccordés à des raccords domestiques, caractérisé en ce que les tuyaux en matière synthétique sont déformés et ouverts par pression et chaleur à la manière d'un raccord à l'intérieur de la paroi voisine du raccord domestique dans la zone de recouvrement de la section de l'embouchure du raccord domestique.

2. Procédé selon la revendication 1, caractérisé en ce que la partie déformée est découpée dans la partie la plus éloignée de celle qui rentre dans le raccord domestique.

3. Procédé selon la revendication 1 ou 2, caractérisé en ce que la position de la zone de recouvrement est déterminée par la dimension du caniveau précédent et est à nouveau étalonnée de manière adéquate dans les tuyaux de matière synthétique.

4. Procédé selon la revendication 1 ou 2, caractérisé en ce que la position de la zone de recouvrement est marquée à la sortie du raccordement domestique et est à nouveau déterminée à l'aide de systèmes de surveillance optique ou de capteurs.

5. Dispositif pour la mise en oeuvre du procédé selon l'une des revendications 1 à 4, avec un chariot pouvant être déplacé dans le caniveau, caractérisé en ce que le chariot (6) transporte un corps de façonnage pouvant être chauffé (7) raccordé à une source d'énergie, corps de façonnage qui peut être déplacé dans la zone de recouvrement pour sortir du caniveau (1) et entrer dans le raccord domestique (2) et inversement.

6. Dispositif selon la revendication 5, caractérisé en ce que le corps de façonnage (7) est en forme de dôme ou de pointe sur le côté voisin du raccord domestique (2) en cas de section circulaire.

7. Dispositif selon la revendication 5 ou 6, caractérisé en ce que le corps de façonnage (7) est équipé sur son pourtour d'éléments coupants actifs pouvant être déplacés.

8. Dispositif selon l'une des revendication de 5 à 7, caractérisé en ce que le corps de façonnage (7) est équipé d'un élément de couplage qui peut être relié de manière temporaire à une tige de couplage (4) qui peut être glissée dans le raccord domestique (2).

9. Dispositif selon la revendication 8, caractérisé en ce que la tige de couplage (4) peut être vissée sur le corps de façonnage (7).

10. Dispositif selon l'une des revendications 5 à 9, caractérisé en ce que le corps de façonnage (7) peut être élargi dans son pourtour.
